# DEMANDE DE BREVET EUROPEEN

(11) **EP 2 797 065 A1**
(43) Date de publication de la demande: **29.10.2014**
(21) Numéro de dépôt: 14163987.2
(22) Date de dépôt: 09.04.2014
(51) Int. Cl.: G08G 1/123, H04M 1/725, G09B 21/00, A61H 3/06

(54) **Procédé et système d'information vocale**

(30) Priorité: 26.04.2013 FR 1353889
(71) Demandeur: JCDecaux SA, 92200 Neuilly-Sur-Seine (FR)
(72) Inventeur: Paquin, Benoît, 78000 Versailles (FR); Uung, Hang, 75116 Paris (FR)
(74) Mandataire: Cabinet Plasseraud

(57) **Abrégé**

Procédé d'information vocale, dans lequel on diffuse des informations sous forme de signal ultrasonore dans un lieu public, on fait capter ledit signal ultrasonore par un téléphone mobile (7) situé dans ledit lieu public, à l'aide du microphone de ce téléphone mobile, et le téléphone mobile convertit le signal ultrasonore en informations vocales et émet lesdites informations vocales vers un utilisateur (P).

## Description

La présente invention est relative aux procédés et systèmes d'information vocale, notamment pour malvoyants.

Le document FR2880459 décrit un exemple d'un tel procédé, dans lequel on communique vocalement aux voyageurs attendant à un arrêt d'autobus, des informations relatives aux temps d'attente des prochains autobus arrivant à cette station.

Ce procédé connu donne satisfaction, mais présente les inconvénients que d'une part, l'information vocale peut être perturbée par les bruits ambiants, notamment bruits de circulation, et d'autre part, que cette diffusion d'information vocale contribue à augmenter la pollution sonore en milieu urbain.

La présente invention a notamment pour but de pallier ces inconvénients.

A cet effet, selon l'invention, un procédé du genre en question comporte les étapes suivantes:
- une étape de diffusion dans laquelle on diffuse des informations sous forme de signal ultrasonore,
- une étape de réception dans lequel on fait capter ledit signal ultrasonore par un téléphone mobile, à l'aide du microphone de ce téléphone mobile,
- une étape d'information dans laquelle on fait convertir le signal ultrasonore en informations vocales en langage humain par ledit téléphone mobile et on fait émettre lesdites informations vocales par un transducteur acoustique appartenant au téléphone mobile.

Grâce à ces dispositions, les informations sont diffusées sous forme ultrasonore sans générer de pollution sonore et sans perturbation par le bruit ambiant, puis sont converties en message vocal directement par le téléphone mobile de l'utilisateur, ce qui permet de délivrer ce message vocal avec la meilleure qualité possible. De plus, ce mode de diffusion ultrasonore permet que les informations soient reçues sans difficulté par le téléphone mobile, et notamment sans aléa d'établissement de la communication entre l'installation qui diffuse les informations et le téléphone mobile (notamment, ce mode de communication est beaucoup plus simple et sûr, à cet égard, qu'une communication radio courte portée).

Dans divers modes de réalisation du procédé selon l'invention, on peut éventuellement avoir recours en outre à l'une et/ou à l'autre des dispositions suivantes :
- au cours de l'étape d'information, on fait émettre lesdites informations par un écouteur appartenant au téléphone mobile ;
- au cours de l'étape d'information, on fait d'abord sonner ou vibrer le téléphone mobile, puis on émet lesdites informations vocales une fois que le téléphone mobile a été décroché par un utilisateur ;
- au cours de l'étape d'information, on émet lesdites informations vocales en réponse à une action initiée par l'utilisateur (par exemple lancement d'une application) ;
- au cours de l'étape de diffusion, on diffuse lesdites informations sous forme de signal ultrasonore codé numériquement, et au cours de l'étape d'information, on décode ledit signal ultrasonore ;
- au cours de l'étape de diffusion, plusieurs informations sous forme de signal ultrasonore, et au cours de l'étape d'information, on fait choisir à l'utilisateur quelle information il souhaite écouter ;
- au cours de l'étape de diffusion, on diffuse lesdites informations à un arrêt d'autobus, et lesdites informations concernent au moins l'arrivée d'un prochain autobus.

Par ailleurs, l'invention a également pour objet un système d'information vocale, comprenant :
- un dispositif électronique de diffusion adapté pour diffuser des informations sous forme de signal ultrasonore,
- au moins un téléphone mobile ayant un microphone adapté pour capter ledit signal ultrasonore et une unité centrale électronique adaptée pour convertir le signal ultrasonore en informations vocales en langage humain et pour faire émettre lesdites informations vocales par un transducteur acoustique appartenant au téléphone mobile.

D'autres caractéristiques et avantages de l'invention apparaîtront au cours de la description suivante d'un de ses modes de réalisation, donné à titre d'exemple non limitatif, en regard du dessin joint.

Sur les dessins :
- la figure 1 est une vue en perspective d'un arrêt d'autobus dans lequel l'invention peut être mise en oeuvre,
- la figure 2 est un schéma bloc illustrant le dispositif électronique utilisé dans l'arrêt d'autobus de la figure 1, coopérant avec le téléphone mobile d'un utilisateur.

Sur les différentes figures, les mêmes références désignent des éléments identiques ou similaires.

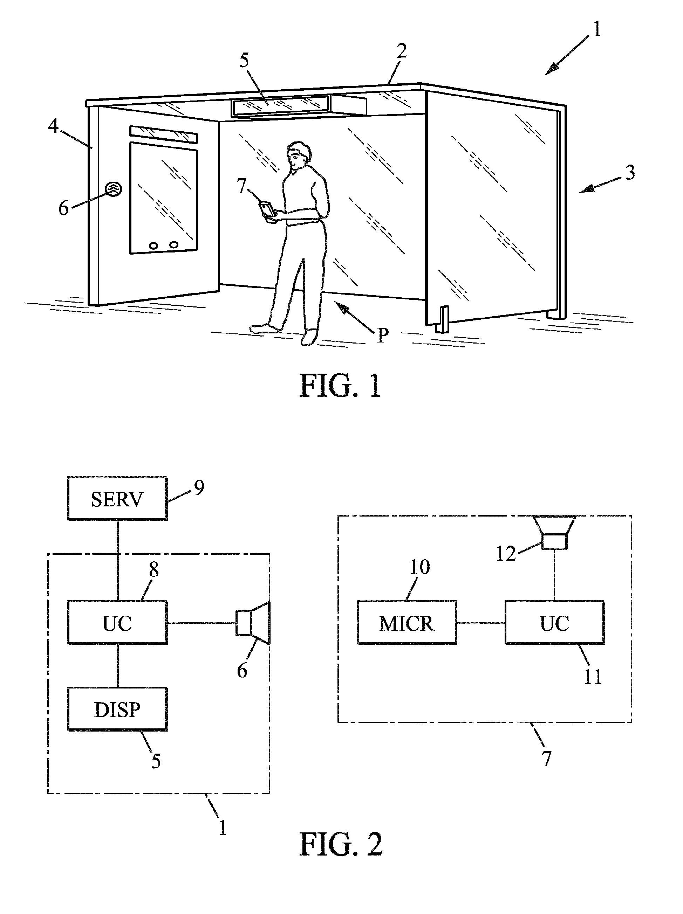

La figure 1 représente une station 1 appartenant à un réseau de transports en commun, par exemple un arrêt d'autobus. Dans ce qui suit, on fera référence uniquement à l'exemple des autobus, mais l'invention serait applicable à d'autres types de véhicules de transport en commun, par exemple train, métro, tramway. L'invention serait également applicable à la transmission d'informations vocales à un utilisateur dans tout autre lieu public (Par exemple, l'invention permet de diffuser des informations vocales à partir de toilettes publiques [pour indiquer si elles sont en service ou non, occupées ou non], de bornes de propreté [pour en signaler la proximité], ou de tout autre mobilier urbain).

La station 1 peut par exemple se présenter sous la forme d'un abri présentant notamment un toit 2 reposant sur une structure porteuse 3 et pouvant comporter un panneau d'affichage lumineux 4 ou un écran électronique publicitaire ou d'information. La station 1 peut également comporter en outre un afficheur électronique 5, intégré par exemple au toit de ladite station, permettant d'afficher notamment des informations sur le ou les prochains autobus arrivant à ladite station et les temps d'attente ou heures d'arrivée, par exemple en fonction d'informations reçues d'un serveur 9 (SERV) visible sur la figure 2.

La station 1 est équipée d'un dispositif électronique permettant de communiquer des informations vers le téléphone mobile 7 d'un utilisateur P (figure 1) situé dans la station ou à proximité, notamment un utilisateur malvoyant. Les informations en question comprennent notamment les informations susmentionnées sur les prochains autobus arrivant à la station, et / ou des informations générales ou d'autres types d'informations spécifiques.

Ce dispositif électronique peut être intégré par exemple dans le panneau d'affichage 4 ou éventuellement dans l'afficheur 5 ou toute autre partie de la station 1, et comporte par exemple :
- une unité centrale électronique 8 telle qu'un microprocesseur ou un microcontrôleur (UC), communiquant par voie filaire ou radio avec le serveur 9 susmentionné et commandant l'afficheur 5 (DISP) en fonction des informations reçues du serveur 9,
- un haut-parleur 6 ou tout autre transducteur acoustique adapté pour diffuser un signal ultrasonore dans la station 1 et/ou à proximité, ce signal ultrasonore étant inaudible par l'oreille humaine.

Le téléphone mobile 7 de l'utilisateur P, comporte notamment, de façon classique :
- au moins un microphone 10 (MICR) adapté pour capter ledit signal ultrasonore,
- au moins une unité centrale électronique 11 (UC) recevant les informations captées par le microphone 10,
- au moins un transducteur acoustique 12 pouvant être notamment un haut-parleur intégré à l'écouteur du téléphone 7 ou à une oreillette avec ou sans fil.

Le système qui vient d'être décrit fonctionne comme suit.

Dans l'exemple considéré ici, le serveur 9 envoie à l'unité centrale 8 de la station 1, des informations relatives aux prochains autobus arrivant à la station 1 et à leurs heures d'arrivée et/ou aux temps d'attente correspondant. Eventuellement, l'unité centrale 8 peut avoir en mémoire ou recevoir du serveur 9, d'autres informations telles que des informations générales (météo ou tout autre sujet d'information générale) et / ou des informations locales relatives au lieu de la station 1 (informations touristiques, culturelles ou de loisirs par exemple, ou publicités locales).

Ces informations sont diffusées par l'unité centrale 8, dans la station 1, par le haut-parleur 6, sous forme de signal ultrasonore codé numériquement (ou éventuellement modulé en modulation analogique). Ce signal ultrasonore est inaudible des humains et ne génère donc pas de pollution sonore, et il est peu ou pas perturbé par le bruit ambiant de la rue.

Lorsqu'un utilisateur P est présent dans la station 1, si cet utilisateur a un téléphone mobile 7 programmé à cet effet, ledit téléphone mobile capte ledit signal ultrasonore avec son microphone 10 et l'unité centrale 11 du téléphone mobile décode le signal ultrasonore capté et le transforme en des informations vocales compréhensibles par l'utilisateur, puis émet lesdites informations vocales le transducteur acoustique 12, de préférence directement à l'oreille de l'utilisateur P, de sorte que ledit utilisateur reçoit clairement lesdites informations sans perturber d'autres personnes présentes dans la station 1.

Eventuellement, l'unité centrale 11 du téléphone 7 est programmée pour d'abord faire sonner ou vibrer le téléphone mobile à réception du signal ultrasonore, puis émettre lesdites informations vocales une fois que le téléphone mobile a été décroché par l'utilisateur.

Eventuellement, l'unité centrale 11 peut émettre lesdites informations vocales en réponse à une action initiée par l'utilisateur, par exemple le lancement d'une application dédiée capable de décoder le signal ultrasonore capté et émettre les informations vocales.

Eventuellement, lorsque l'unité centrale 8 de la station 1 diffuse plusieurs types d'information sous forme ultrasonore comme décrit précédemment, l'unité centrale 11 du téléphone peut être programmée pour faire choisir à l'utilisateur quel type d'information il souhaite écouter (par exemple informations sur les prochains autobus ou informations générales ou informations locales), ce choix pouvant être fait notamment par commande vocale.

Comme il résulte de ce qui précède, l'invention est particulièrement adaptée pour la transmission d'informations à des malvoyants dans les lieux publics.

## Revendications

1. Procédé d'information vocale, comportant les étapes suivantes:
- une étape de diffusion dans laquelle on diffuse des informations sous forme de signal ultrasonore,
- une étape de réception dans lequel on fait capter ledit signal ultrasonore par un téléphone mobile (7), à l'aide du microphone (10) de ce téléphone mobile,
- une étape d'information dans laquelle on fait convertir le signal ultrasonore en informations vocales en langage humain par ledit téléphone mobile (7) et on fait émettre lesdites informations vocales par un transducteur acoustique (12) appartenant au téléphone mobile.

2. Procédé selon la revendication 1, dans lequel au cours de l'étape d'information, on fait émettre lesdites informations par un écouteur (12) appartenant au téléphone mobile.

3. Procédé selon la revendication 1 ou la revendication 2, dans lequel au cours de l'étape d'information, on fait d'abord sonner ou vibrer le téléphone mobile (7), puis on émet lesdites informations vocales une fois que le téléphone mobile a été décroché par un utilisateur.

4. Procédé selon la revendication 1 ou la revendication 2, dans lequel au cours de l'étape d'information, on émet lesdites informations vocales en réponse à une action initiée par l'utilisateur.

5. Procédé selon l'une quelconque des revendications précédentes, dans lequel au cours de l'étape de diffusion, on diffuse lesdites informations sous forme de signal ultrasonore codé numériquement, et au cours de l'étape d'information, on décode ledit signal ultrasonore.

6. Procédé selon l'une quelconque des revendications précédentes, dans lequel au cours de l'étape de diffusion, plusieurs informations sous forme de signal ultrasonore, et au cours de l'étape d'information, on fait choisir à l'utilisateur quelle information il souhaite écouter.

7. Procédé selon l'une quelconque des revendications précédentes, dans lequel au cours de l'étape de diffusion, on diffuse lesdites informations à un arrêt d'autobus (1), et lesdites informations concernent au moins l'arrivée d'au moins un prochain autobus.

8. Système d'information vocale, comprenant :
- un dispositif électronique de diffusion (8, 6) adapté pour diffuser des informations sous forme de signal ultrasonore,
- au moins un téléphone mobile ayant un microphone (10) adapté pour capter ledit signal ultrasonore et une unité centrale électronique (11) adaptée pour convertir le signal ultrasonore en informations vocales et pour faire émettre lesdites informations vocales par un transducteur acoustique (12) appartenant au téléphone mobile.
